(19) Europäisches Patentamt
European Patent Office
Office européen des brevets

(11) **EP 2 795 362 B1**

(12) **EUROPÄISCHE PATENTSCHRIFT**

(45) Veröffentlichungstag und Bekanntmachung des Hinweises auf die Patenterteilung:
**09.03.2016   Patentblatt 2016/10**

(21) Anmeldenummer: **12808308.6**

(22) Anmeldetag: **11.12.2012**

(51) Int Cl.:
*G01S 17/08* (2006.01)          *G01S 7/497* (2006.01)
*G01S 7/481* (2006.01)

(86) Internationale Anmeldenummer:
**PCT/EP2012/075125**

(87) Internationale Veröffentlichungsnummer:
**WO 2013/092318 (27.06.2013 Gazette 2013/26)**

(54) **ENTFERNUNGSMESSER-JUSTAGE**

DISTANCE SENSOR ADJUSTMENT

AJUSTEMENT D'UN TÉLÉMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2011   EP 11195515**

(43) Veröffentlichungstag der Anmeldung:
**29.10.2014   Patentblatt 2014/44**

(73) Patentinhaber: **Leica Geosystems AG**
**9435 Heerbrugg (CH)**

(72) Erfinder: **BÖSCH, Thomas**
**A-6890 Lustenau (AT)**

(74) Vertreter: **Gyaja, Christoph Benjamin**
**Kaminski Harmann**
**Patentanwälte AG**
**Landstrasse 124**
**9490 Vaduz (LI)**

(56) Entgegenhaltungen:
**EP-A1- 1 351 070          EP-A1- 1 752 788**
**EP-A1- 1 980 878          EP-A1- 2 051 102**
**WO-A1-2007/012531          WO-A1-2007/033860**
**WO-A2-03/046604**

**Beschreibung**

Die Erfindung betrifft ein Justierverfahren nach dem Oberbegriff des Anspruchs 1 und einen Entfernungsmesser nach dem Oberbegriff des Anspruchs 14.

Opto-elektrische Entfernungsmesser (auch EDM (Electronic Distance Meter, LRF (Laser Range Finder), LIDAR, etc. genannt) arbeiten nach dem Prinzip, dass elektromagnetische Strahlung, meist in Form von Pulsen von sichtbarem oder unsichtbarem Licht, in Richtung eines Zielobjekts ausgesendet wird. Dieses Zielobjekt wirft zumindest einen Teil des ausgesendeten Lichts in Richtung des Messgeräts zurück, in welchem dieses empfangene Licht in ein elektrisches Signal umgewandelt wird. Anhand der benötigten Laufzeit des Lichts und der bekannten Ausbreitungsgeschwindigkeit des Lichts wird von einer elektronischen Auswerteeinheit die Distanz zwischen dem Messgerät und dem Zielobjekt bestimmt.

Beispielhafte Ausführungsformen solcher Geräte finden sich etwa in den Dokumenten EP 2 051 102, EP 1 311 873 oder EP 1 913 415, in welchen auch weitere Details zu den Messprinzipien zu finden sind.

Das Aussenden des Lichtes soll dabei als Lichtstrahl mit möglichst geringer Divergenz erfolgen, beispielsweise um einen klar definierten Messpunkt auf dem Zielobjekt zu erhalten und auch um die Lichtsignalintensität am Messpunkt auch bei großen Messdistanzen hoch zu halten, unter anderem auch, um bei der Verwendung von sichtbarem Licht einen deutlich sichtbaren Messpunkt auf dem Zielobjekt zu erhalten.

Um einen derartigen Lichtstrahl geringer Divergenz zu erhalten, ist eine entsprechende Kollimationsoptik oder Sendeoptik vorzusehen, welche gegenüber der Lichtquelle entsprechend justiert werden muss, um die gewünschte Strahldivergenz zu erzielen. Als Lichtquellen werden vorzugsweise Halbleiterlichtquellen wie Laserdioden oder LEDs eingesetzt, wobei Laser-Emitter bedingt durch ihre gattungsgemäß geringe Strahldivergenz am häufigsten eingesetzt werden. Die Kollimationsoptik kann als einfache optische Linse oder auch als komplexere Optik ausgeführt sein. Aufgrund von Fertigungstoleranzen kann es insbesondere bei großen Messdistanzen erforderlich sein, die Kollimationsoptik im Rahmen des Fertigungsprozesses des EDMs bei jedem Gerät gesondert zu justieren.

Auch beim Empfangen des Lichtes wird meist eine Empfangsoptik, beispielsweise eine Sammellinse, eingesetzt, welche das Licht aus Richtung Zielobjekt auf ein photosensitives Bauelement fokussiert, beispielsweise auf eine Photodiode, speziell eine PIN-Photodiode oder APD. Dadurch wird die lichtempfangende Querschnittsfläche des Geräts, mit welcher das zurückgeworfene Licht erfasst wird, gegenüber dem verhältnismäßig kleinen lichtempfindlichen Bereich des photosensitiven Bauelements vergrößert. Durch eine große Apertur der Empfangsoptik kann die Intensität des optischen Signals auf dem Empfänger-Element vergrößert werden. Die aktiven Flächen des photosensitiven Bauelements müssen meist aus anderen Gründen klein gehalten werden, beispielsweise um eine Sättigung durch Umgebungslicht zu vermeiden und auch da die Reaktionszeit bzw. Bandbreite des Empfängers mit Vergrößerung der aktiven Fläche abnimmt.

Auch die Empfangsoptik muss gegenüber dem elektrooptischen Empfangselement in ihrem Fokus ausgerichtet werden, wobei hierbei im allgemeinen größere Maßtoleranzen als bei der Kollimation des Senders zugelassen werden können. Hauptaufgabe der Empfangslinse ist ein Sammeln des empfangenen Lichts, wobei nicht zwingend eine exakte, scharfe Abbildung des Ziels auf dem Empfänger erforderlich ist.

Sowohl die Sende- als auch die Empfangsoptik kann neben der erwähnten Linsen auch noch weitere optische Komponenten aufweisen: etwa Wellenlängenfilter, Polarisationsfilter, Umlenkspiegel, etc.

Neben der Justage der Fokussierung der Sende- und Empfangsoptiken sind auch die optischen Achsen des Sende- und Empfangsstrahlengangs derart zueinander auszurichten, dass der vom Zielobjekt zurückgeworfene Anteil des ausgesendeten Lichts auch auf den Empfänger trifft. Dieses muss über den gesamten spezifizierten Messbereich des EDMs gewährleistet sein und erfordert, dass die jeweils zwei Winkelrichtungen der beiden Strahlengänge entsprechend zueinander ausgerichtet sind. Die Lösung eines koaxialen Sende- und Empfangsstrahlengangs erfüllt dieses Kriterium; die dazu benötigten optischen Komponenten sind jedoch recht aufwändig. Daher werden EDM, insbesondere einfache, handgehaltene Distanzmesser, meist nicht mit koaxialen Strahlengängen ausgeführt, sondern die Sende- und Empfangsoptik werden nebeneinander angeordnet. Um die Ausrichtbedingungen zu erfüllen, müssen sich die optischen Achsen des Sende- und Empfangsstrahlengangs zumindest annähernd in einem Punkt schneiden, welcher in einer bestimmten Entfernung und nicht im Unendlichen liegt.

Aus oben genannten Gründen ist im Rahmen der EDM-Fertigung eine Justage von Sendeelement, Sendeoptik, Empfangsoptik und Empfangselement zueinander erforderlich. Hierzu werden im Stand der Technik beim Zusammenbau des Geräts das Sende- und das Empfangselement jeweils separat in seiner Position gegenüber der zugehörigen Optik justiert. Dieses bedeutet aber, dass der Sender gegenüber dem Empfänger - zumindest während der Justage - nicht fix zueinander positioniert sein kann. Beispielsweise können daher Sender und Empfänger nicht schon vorab auf einer gemeinsamen, vorgefertigten Leiterplatte fix und endgültig positioniert sein.

Es ist beispielsweise die Schrift EP 1 351 070 bekannt, in welcher eine Justage des Strahlengangs eines Entfernungsmessers durchgeführt wird, indem die Fotodiode über ihre elektrischen Kontakte temporär in der Position justierbar gemacht wird und nach erfolgter Justage in ihrer justierten Position auf der Leiterplatte elektrisch leitend fixiert ist. In anderen Worten wird dabei also beispielsweise eine Lötstelle der Fotodiode aufgeschmolzen und somit die Fotodiode zur Justage temporär beweglich gemacht. In EP 1 752 788 ist der Empfänger mit der Leiterplatte in wenigstens zwei Richtungen starr verbunden.

Auch WO 2007/012531 oder WO 2007/033860 zeigen Distanzmesser-Aufbauten und beschreiben deren Justage durch Bewegung des Senders und/oder Empfängers, welche auf getrennten Leiterplatten untergebracht sind oder welche (zumindest während der Justage) gegenüber der Leiterplatte beweglich ausgeführt sind. DE 101 57 378 zeigt einen Distanzmesser mit einer temperaturkompensierenden Anordnung der optischen Achsen. Bei EP 1 980 878 sind Sende- und Empfangsoptik zu einer Doppellinse verbunden.

Zur Ausrichtung der optischen Achsen von Sende- und Empfangspfad sind alternativ auch Optiken bekannt, welche gegenüber der Leiterplatte mit fixem Sende- und Empfangselement verschiebbar oder verkippbar gestaltet sind. Ein derartiger mechanischer Aufbau gestaltet sich jedoch konstruktiv aufwändig. Beispielsweise würden zwei gegeneinander bewegliche Optikträger für Sende- und Empfangsoptik die mechanische Robustheit des EDM-Systems beeinträchtigen. Auch ein Einkleben einer frei beweglichen, justierbaren Optik in einer genau justierten Position gestaltet sich im Rahmen der Fertigung des EDMs entsprechend schwierig und fehleranfällig.

Es ist eine Aufgabe der vorliegenden Erfindung, einen optoelektronischen Distanzmesser zu verbessern, insbesondere dessen Produktion zu vereinfachen.

Eine Aufgabe ist dabei, die Justage der optischen Sende- und Empfangspfade zu verbessern und zu vereinfachen, insbesondere die Justage der Winkelrichtungen der optischen Sende- und Empfangsachse zueinander.

Die Aufgabe umfasst auch, eine Justage des optischen Pfades des EDMs zu verbessern und zu vereinfachen, bei welchem Sende- und Empfangselemente bereits fix relativ zueinander als eine gemeinsame Baugruppe montiert sind und nicht mehr gegeneinander bewegt werden können.

Es ist auch eine Aufgabe, die Verwendung einer komplett mit Sendeelement und Empfangselement bestückten Leiterplatte als fertiger Baugruppe zu ermöglichen, auf welcher zur Strahlengangjustage keine Komponenten mehr verschoben werden müssen, sondern welche lediglich noch die Baugruppe als Gesamtes gegenüber einem Optikträger mit Sende- und Empfangsoptik justiert werden muss.

Es ist eine weitere Aufgabe, den Justagevorgang des optischen Pfades eines EDMs, welcher Sende- und Empfangselement fix auf einer gemeinsamen Baugruppe trägt zu vereinfachen. Dies soll speziell unter ökonomischen Gesichtspunkten, wie vereinfachtes Assembling bei der Geräteproduktion, Miniaturisierung, Reduktion von Komponentenanzahl und Komponentenkosten, Zeitersparnis oder einfache Handhabung der Justage erfolgen.

Die Erfindung betrifft ein Justageverfahren für einen optoelektronischen Entfernungsmesser. Der Entfernungsmesser weist eine Baugruppe mit einer Strahlungsquelle zum Aussenden einer optischen Sendestrahlung, einem Detektor zum Empfangen einer optischen Empfangsstrahlung und einer Leiterplatte auf, welche in starrer örtlicher Beziehung zueinander angeordnet sind.

Der Entfernungsmesser weist weiters einen Optikträger mit einer Sendeoptik und einer Empfangsoptik auf, wobei durch die Strahlungsquelle und die Sendeoptik eine Senderichtung und durch den Detektor und die Empfangsoptik eine Empfangsrichtung definiert werden. Die Sendeoptik und die Empfangsoptik weisen dabei unterschiedliche Brennweiten auf.

Das Justageverfahren stellt dabei eine angestrebte Ausrichtung der Senderichtung gegenüber der der Empfangsrichtung her.

Erfindungsgemäß erfolgt dabei ein Justieren durch ein Verschieben der gesamten Baugruppe gegenüber dem Optikträger, wobei das Verschieben durch eine Hebelwirkung der unterschiedlichen Brennweiten jeweils unterschiedlich große, verschiebungsbedingte Richtungswinkeländerungen von Senderichtung und Empfangsrichtung bewirkt. Durch diese unterschiedlich großen Richtungswinkeländerungen wird die Ausrichtung der Senderichtung gegenüber der Empfangsrichtung variiert.

Die Baugruppe ist dabei eine in sich feste Einheit, bei welcher insbesondere Strahlungsquelle und Detektor in ihrer Position zueinander unverrückbar sind, also diese auch nicht zu Justagezwecken temporär in der Position oder Orientierung zueinander verändert werden. Beispielsweise kann eine Baugruppe in Form einer fix mit Detektor und Strahlungsquelle bestückten Leiterplatte ausgebildet sein.

Das Justageverfahren kann durch das Verschieben in einer ersten lateralen Richtung eine erste Winkelausrichtung der Senderichtung zur Empfangsrichtung justieren.

Das Justageverfahren kann durch das Verschieben in einer zweiten lateralen Richtung eine zweite Winkelausrichtung der Senderichtung zur Empfangsrichtung justieren. Dabei kann in einer Ausführungsform die erste laterale Richtung und die zweite laterale Richtung voneinander unabhängig sein, insbesondere können diese orthogonal zueinander sein.

Dabei können auch die jeweils zugehörigen ersten und zweiten Winkelausrichtungen, welche durch das jeweils zugehörige Verschieben bewirkt werden, unabhängig voneinander sein, im speziellen können diese orthogonal zueinander sein.

Beim Justageverfahren kann durch das Verschieben in der zweiten lateralen Richtung auch nur die Empfangsrichtung variiert und die Senderichtung unverändert gelassen werden. Somit kann beispielsweise die Senderichtung zum Optikträger in der zweiten Winkelausrichtung im Rahmen der Justage unverändert bleiben.

Ein Anliegen an einer gemeinsamen Auflagefläche von Optikträger und Baugruppe kann dabei die Richtung des lateralen Verschiebens definieren. Es kann somit die Auflagefläche zur Festlegung eines Freiheitsgrades orthogonal zur Ebene der lateralen Verschiebung dienen. Anders gesagt kann die Auflagefläche eine Ebene definieren, in welcher die Baugruppe gegenüber dem Optikträger lateral verschiebbar ist.

Bei der Justage kann die Lage der Sendeoptik gegenüber der Empfangsoptik unverändert bleiben, insbesondere unverändert in einer Richtung orthogonal zur den optischen Achse der Optiken oder bezüglich einer Verkippung der optischen Achsen. Die Sendeoptik und/oder die Empfangsoptik kann dabei allenfalls nur in Fokus-Richtung, also in Richtung von den optischen Achsen der Optiken, verschoben werden, speziell für eine Korrektur der Fokussierung der Optiken.

Vor der Justage kann dabei die Lage der Empfangsoptik im Optikträger bereits endgültig fixiert sein, auch in Ihrer axialen Fokus-Richtung.

Vor der Justage kann die Lage der Sendeoptik im Optikträger in eine Pre-Fokus-Stellung vorkollimiert werden, in welcher eine Divergenz der vom Entfernungsmesser emittierten Sendestrahlung größer ist als jene einer optimalen Kollimation. Dabei kann insbesondere ausgehend von der Pre-Fokus-Stellung die Fokusstellung durch ein Verschieben, insbesondere ein Einpressen, der Sendeoptik in eine tubusförmige Ausnehmung des Optikträgers erzielbar sein.

Das Justageverfahren kann ein Beibehalten der vorkollimierten Pre-Fokus-Stellung der Sendeoptik gegenüber der Strahlungsquelle während der Justage durchführen, speziell durch ein Mitverschieben der Sendeoptik mit der Baugruppe in Fokus-Richtung der Sendeoptik.

Das Justageverfahren kann nach dem Justieren und nach einem Fixieren der Baugruppe gegenüber dem Optikträger ein Kollimieren der Sendeoptik in Richtung Fokus-Stellung zur Einstellung einer gewünschten Divergenz des vom Entfernungsmesser emittierten Sendestrahlengangs aufweisen, insbesondere durch ein Einpressen der Sendeoptik in eine tubusförmige Ausnehmung des Optikträgers.

Beim Justageverfahren kann vor dem Vorkollimieren in eine Pre-Fokus-Stellung der Sendeoptik ein Positionieren der Baugruppe gegenüber dem Optikträger in eine Position erfolgen, von welcher aus die Baugruppe nur in Richtung einer Dekollimation der Sendeoptik oder orthogonal dazu verschiebbar ist. Hierdurch kann auch nach einer justagebedingten Verschiebung die Erreichbarkeit einer endgültigen Kollimation der Sendeoptik in Fokus-Stellung sichergestellt werden, insbesondere durch ein Einpressen der Sendeoptik in den Optikträger in Richtung einer Kollimation.

Die Sendeoptik und/oder die Empfangsoptik können dabei einen Umlenkspiegel aufweisen, beispielsweise zur Herstellung der Unabhängigkeit von erster und zweiter Winkelausrichtung.

Die angestrebte Ausrichtung der Senderichtung gegenüber der der Empfangsrichtung kann dadurch definiert sein, dass Senderichtung und Empfangsrichtung zumindest annähernd einen gemeinsamen Schnittpunkt in einer vorgegebenen Entfernung aufweisen.

Die Erfindung betrifft auch einen optoelektronischen Entfernungsmesser, insbesondere einen handgehaltenen Laser-Distanzmesser, mit

- einer Leiterplatte, einer optischen Strahlungsquelle und einem optischen Detektor, welche als gemeinsame Baugruppe unverrückbar gegeneinander positioniert und orientiert sind,

- einem Optikträger mit einer Sendeoptik und einer Empfangsoptik mit einer jeweils unterschiedlichen Brennweite, insbesondere wobei die Sendeoptik und Empfangsoptik gegeneinander lediglich in Richtung ihrer jeweiligen optischen Achsen verschiebbar sind, und

- einer elektronischen Auswerteeinheit, mit welcher auf Basis einer Signallaufzeit anhand eines digitalisierten Empfangssignals des Detektors eine Distanz vom Entfernungsmesser zu einem Zielobjekt ermittelbar ist,

welcher mit einem erfindungsgemäßen Justierverfahren justiert ist. Speziell ist dabei erfindungsgemäß das Aufbaukonzept des Entfernungsmessers bzw. die Bauteilanordnung im Entfernungsmesser derart ausgebildet, dass das mit dem Entfernungsmesser das oben beschriebene Verfahren durchführbar ist.

Bei dem Entfernungsmesser kann insbesondere die Strahlungsquelle parallel zur Leiterplattenebene in Richtung der Sendeoptik emittieren. Der Detektor kann einen parallel zur Leiterplatte liegenden photosensitiven Bereich aufweisen. Die Empfangsstrahlung kann von der Empfangsoptik über einen Umlenkspiegel auf den Detektor gelenkt werden. Dabei kann die Baugruppe gegenüber dem Optikträger in einer ersten und zweiten Richtung verschiebbar und in einer dritten Richtung an einem mechanischen Anschlag anliegend sein.

Beim Entfernungsmesser kann die Sendeoptik zur Kollimation des Sendestrahlengangs in einer tubusförmigen Aufnahme des Optikträgers angebracht sein, und die Sendeoptik kann axial in den Tubus einpressbar sein.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:

Fig. 1 eine erste Ausführungsform eines erfindungsgemäßen Entfernungsmessers als Block-Schema;

Fig. 2 beispielhafte Darstellungen bekannter Justageprinzipien von EDM Strahlengängen;

Fig. 3a eine schematische Darstellung eines ersten Schnitts durch eine erste beispielhafte Ausführungsform einer erfindungsgemäßen justierbaren EDM-Sendeeinheit;

Fig. 3b eine schematische Darstellung eines zweiten Schnitts durch eine erste beispielhafte Ausführungsform einer erfindungsgemäßen justierbaren EDM-Empfangseinheit;

Fig. 3c eine schematische Darstellung eines dritten Schnitts durch eine beispielhafte erste Ausführungsform eine erfindungsgemäßen justierbaren EDMs, welcher orthogonal zu jenen von Fig. 3a und 3b ist;

Fig. 4 eine beispielhafte zweite Ausführungsform eines erfindungsgemäßen justierbaren EDMs in einer Richtung;

Fig. 5 eine beispielhafte dritte Ausführungsform einer erfindungsgemäßen Strahlengangjustage eines EDMs;

Fig. 6 eine beispielhafte vierte Ausführungsform eines erfindungsgemäß justierbaren EDMs in einer 3D-Ansicht;

Fig. 7 eine beispielhafte fünfte Ausführungsform einer erfindungsgemäßen Strahlengangjustage eines EDMs;

Fig. 8 eine beispielhafte sechste Ausführungsform einer erfindungsgemäßen Strahlengangjustage eines EDMs;

Fig. 9 eine beispielhafte zweite Ablaufdarstellung einer EDM Assemblierung mit einer erfindungsgemäßen Strahlengangjustage.

Die Darstellungen in den Figuren dienen lediglich zur Illustration und sind nicht als maßstäblich zu betrachten.

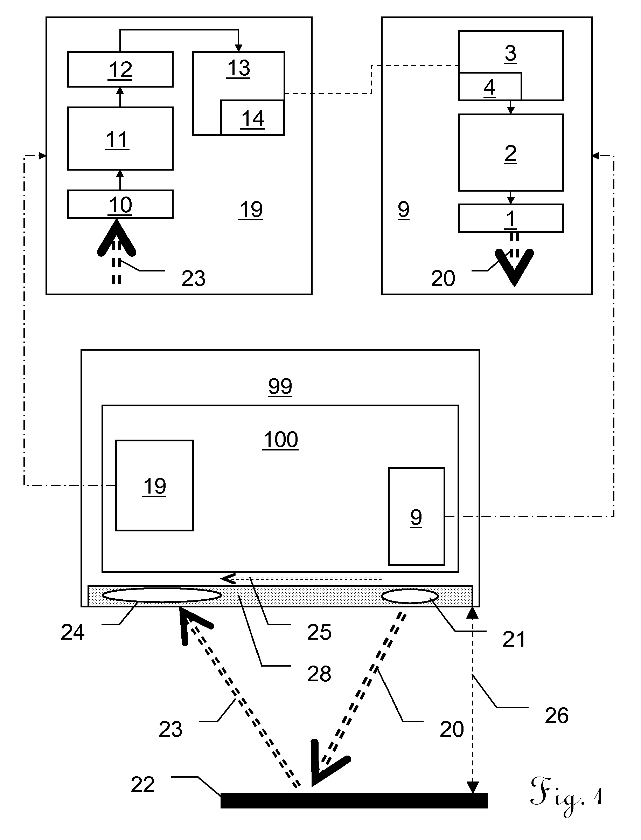

**Fig. 1** zeigt eine Ausführungsform eines erfindungsgemäßen optoelektronischen Distanzmessers 99 als Blockdiagramm. Es kann sich dabei beispielsweise um einen handgehaltenen, batteriebetriebenen Entfernungsmesser oder ein anderes Vermessungsgerät handeln, wie diese beispielsweise vielfältig im Baustellenbereich eingesetzt werden. In der unteren Hälfte der Figur sind zwei getrennte Blöcke der Sendeeinheit 9 und der Empfangseinheit 19 dargestellt. Die dargestellte Trennung ist dabei primär funktionell zu sehen und muss nicht in Form von zwei physisch getrennten Einheiten aufgebaut sein. Die gezeigte Sende- und Empfangseinheit sind beide als gemeinsame Baugruppe 100, z.B. auf einer gemeinsamen Leiterplatte, vormontiert und bilden eine gegeneinander unverrückbare, feste Einheit. Die Baugruppe 100 kann als eine gemeinsame Leiterplatte aufgebaut sein, auf welcher die Sendeeinheit 9 und die Empfangseinheit 19 aufgelötet oder konduktiv aufgeklebt sind. Die Sende- 9 und Empfangseinheit 19 kann dabei jeweils in Form von diskreten Elektronik-Komponenten oder auch als vorgefertigte Sub-Baugruppen aufgebaut sein, welche gegeneinander ortsfest auf der Baugruppe 100 angebracht sind. In der oberen Hälfte der Figur ist jeweils ein Blockschema eines beispielhaften internen Aufbaus einer Ausführungsform der Sendeeinheit 9 bzw. Empfangeinheit 19 dargestellt.

Das Zielobjekt 22, dessen Distanz 26 zu bestimmen ist, wirft zumindest einen Teil der von der Sendeeinheit 9 emittierten elektromagnetischen Strahlung 20 als Empfangssignal 23 zur Empfangseinheit 19 zurück. Ein Teil der emittierten Strahlung kann dabei auch als Referenzstrahl 25 über einen Referenzpfad bekannter Länge zur Empfangseinheit 19 geführt werden. Dabei kann für den Referenzstrahl 25 und den Messstrahl 23 je eine eigene oder auch eine gemeinsame Empfangseinheit 19 vorgesehen sein. Bei einem separaten Referenzempfänger sind die Empfangseinheit 19 oder Teile davon (z.B. 10,11,12) entsprechend mehrfach auszuführen. Auch eine Umschaltung zwischen Referenz- 25 und Messstrahl 23 ist bekannt. Beispielsweise zeigt EP 0 738 899 eine umschaltbare Referenzstrecke 25, EP 0 932 835 die Verwendung von zwei Empfangseinheiten 19 und DE 40 02 356 eine Verwendung von zwei umschaltbaren Sendeeinheiten 9.

Die Sendeeinheit 9 mit einem Steuerungsprozessor 3 und einer Treiberstufe 2 für die emittierenden Komponenten 1, welche die elektrischen Signale der Treiberstufe 2 in elektromagnetische Strahlung 20 umwandelt (z.B. eine Laserdiode mit stimulierter Emission, eine LED, oder eine andere elektrisch ansteuerbare Lichtquelle,). Beim Steuerprozessor 3 ist eine PLL 4 dargestellt, welche alternativ auch gemeinsam mit der Treiberstufe 2, aber auch extern davon angeordnet sein kann. Auch kann Steuerprozessor 3, die Treiberstufe 2 und PLL 4 in einem gemeinsamen Chip, z.B. einem ASIC oder FPGA, integriert sein. Die Sendeeinheit 9 ist dabei derart ausgebildet, dass diese modulierte optische Strahlung, insbesondere hochfrequent intensitätsmodulierte optische Strahlung im sichtbaren oder unsichtbaren Spektralbereich, nach einem von der Steuereinheit vorgegebenen Muster emittieren kann, beispielsweise in Form kurzer Lichtpulse hoher Intensität, burstartigen Paketen von Lichtpulsen, oder einem sonstigen Intensitätsprofil wie etwa Sinus, Sinc, Raised Cosine, Dreieck, Rechteck, Trapez, etc..

Die Empfangseinheit 19 wandelt empfangene elektromagnetische Strahlung 23 mit dem Empfangselement 10 in ein elektrisches Signal um, welches - gegebenenfalls verstärkt - im Block 11, als Konditioniereinheit für die Weiterverarbeitung konditioniert wird (beispielsweise gefiltert, heterodyn oder homodyn gemischt, verstärkt, etc.). Die Konditioniereinheit 11 kann also beispielsweise ein Eingangsfilter, ein Verstärker, eine Mischstufe, ein Sample&Hold-Glied, etc. aufweisen, oder auch eine Kombination von diesen. Ein Beispiel für eine der vielen möglichen Signalfilterungen bei der Konditionierung 11 ist etwa in WO 2011/076907 oder EP-Patentanmeldung Nr. 11187964.9 gezeigt. Der Empfänger 10 der optischen Strahlung 23 kann als Empfangselement eine Photodiode verwenden, beispielsweise eine Avalanche-Photodiode mit entsprechender Vorspannung, oder eine PIN-Photodiode. Das - entsprechend der Modulation des ausgesendeten optischen Signals 20 (und somit auch des empfangenen optischen Signals) - hochfrequente elektrische Ausgangssignal des photosensitiven Elements 10 kann vor der weiteren Verarbeitung oder im Rahmen der Konditionierung 11 aufbereitet werden, insbesondere impedanzgewandelt, verstärkt und/oder bandbegrenzt (etwa mit einem analogen, aktiven oder passiven Filter, einem Transimpedanzverstärker (TIA), ...). Beispielsweise kann eine solche Verstärkerstufe unter anderem auch eine Schaltung nach EP 2 183 865 aufweisen.

Das konditionierte Empfangssignal wird von einem Analog-Digital-Wandler 12 digitalisiert - also Zeit und Wert quantifiziert - und einer digitalen Recheneinheit 13 (einem Mikroprozessor, DSP, FPGA, ASIC, etc.) zur Weiterverarbeitung und Bestimmung der Distanz zugeführt. Weiters sind ein Taktgeber 14, beispielsweise ein Schwingquarz als Oszillator und eine PLL, gezeigt.

Zur Distanzmessung ist auch eine Koordination von Sender 9 und Empfänger 19 erforderlich, etwa eine Kommunikationsverbindung und oder eine Synchronisation zur Steuerung der zur Messung erforderlichen Abläufe. Wie erwähnt ist die dargestellte Trennung funktional zu sehen, was heißen mag, dass die Sende- 9 und Empfangseinheit 19 bzw. Teile davon auch als gemeinsamer Chip ausgeführt sein können, z.B. die Recheneinheiten 10 und 3, oder auch andere. Wie beschrieben sind Sender und Empfänger physikalisch auf einer gemeinsamen Baugruppe 100, etwa einer Leiterplatte untergebracht, wobei mit Leiterplatten auch Trägersubstrate von Schaltkreisen in Dickschicht- oder Dünnschichttechnik gemeint sein können. Ein Aufbau der Baugruppe 100 mit mehreren, getrennten Leiterplatten als Sub-Baugruppen ist ebenfalls als Baugruppe 100 im Sinne der Erfindung zu sehen, wenn diese fest miteinander verbunden sind und während der hier beschriebenen Justage das Sendeelement 1 nicht gegen das Empfangselement 10 in seiner Position und/oder Orientierung bewegt wird, auch nicht temporär.

Um eine Distanzmessung durchführen zu können, muss die emittierte Strahlung 20, oder genauer gesagt der von Zielobjekt in Richtung des Distanzmessers zurückgeworfene Anteil der Strahlung 23 auf das Empfängerelement 10 auftreffen. Um dieses zu gewährleisten, hat der EDM 99 eine Sendeoptik 21 und eine Empfangsoptik 24, welche hier beide jeweils durch eine Sammellinse (als eine der einfachsten Ausführungsformen) in einem Optikträger 28 dargestellt sind. Die Sende- 21 und Empfangsoptik 24 formen jeweils einen Sende- und Empfangs-Strahlengang, welcher jeweils durch eine optische Achse beschrieben werden kann, welche durch das Sende- 9 bzw. Empfangselement 19 läuft. Die Optiken können aus Gläsern oder dafür geeigneten Kunststoffen, beispielsweise Zeonex oder anderen, speziell für optische Komponenten geeigneten Kunststoffen, bestehen und können auch verschiedenste optische Beschichtungen aufweisen, z.B. Entspiegelungen, Wellenlängenfilter, etc.

Zur Erweiterung des von der Empfangsoptik 24 erfassbaren, seitlichen Winkelbereichs, insbesondere hin zu kürzeren Distanzen, sind auch Optiken mit seitlicher Verzerrung bekannt, sogenannte Nahbereichsoptiken, beispielsweise in Form von segmentierten Linsen. Derartige verziehende Optiken können zur Verbreiterung des vom Empfänger einsehbaren Messbereichs genutzt werden, insbesondere für einen erweiterten Nahbereich. Auch kann mittels eines entsprechend angebrachten Spiegels ein erweiterter Nahbereich auf den Empfänger eingespiegelt werden.

Der Sendeoptik 21 kommt dabei die Aufgabe zu, einen möglichst kollimierten Strahl zu formen, um auch bei weiten Messdistanzen 26 einen klar definierten Messpunkt und auch genügend optische Signalenergiedichte auf dem Zielobjekt 22 zu erhalten. Es wird also eine vorgegebene Divergenz des Sendestrahlengangs angestrebt, welche meist möglichst gering ist. Als Beispiel kann in einem handgehaltenen Entfernungsmesser 99 eine Sendeoptik 21 als Kunststoff- oder Glaslinse, z.B. mit einem Durchmesser von 5mm bis 15mm, insbesondere von etwa 6.5mm, und mit einer Brennweite von 5mm bis 30mm, insbesondere von 9mm, verwendet werden.

In einer Ausführungsform mit einem Halbleiterlaser als Lichtquelle 9, welcher per se etwa eine Divergenz von grob etwa 30° aufweist, kann dieses beispielsweise durch eine Kollimationslinse in Form einer Sammellinse mit einer ersten, verhältnismäßig kurzen Brennweite erzielt werden. Da der Sendestrahl 20 im allgemeinen einen geringen Durchmesser hat, beispielsweise in der Größenordnung von wenigen Millimetern, genügt hier auch meist eine Linse mit einem entsprechend geringem Durchmesser, beispielsweise etwa das 1.5- bis 5-fache des Strahldurchmessers. Rein technisch gesehen könnten auch größere Linsen oder komplexere Sendeoptiken 21 diesen Zweck erfüllen, aus Kostengründen und im Sinne eines kompakten Geräteaufbaus werden in EDMs aber meist Abmessungen in den oben angeführten Bereichen angewandt.

Der Empfangsoptik 24 kommt die Aufgabe zu, möglichst viel des vom Zielobjekt 22 zurückgeworfenen Lichts 23 zu sammeln und auf den sensitiven Bereich des Empfangselements 19 zu lenken. Vereinfachend gesprochen könnte dieses auch derart beschrieben werden, dass die Empfangsoptik 24 den Zielpunkt der Entfernungsmessung auf das Empfangselement 19 abbildet, wobei zur Distanzmessung nicht zwingend eine exakt scharfe Abbildung erforderlich ist, sondern primär ein Sammeln des von der Empfangsoptik 24 erfassten Lichtes auf die querschnittsmäßig kleinere aktive Fläche des optoelektrischen Empfangselements 19. Der Empfangsstrahlengang ist also derart ausgelegt, dass der Zielpunkt auf einem Zielobjekt 22 innerhalb des gesamten spezifizierten Messbereichs des EDMs vom Empfangselement 19 erfassbar ist, wobei bei entsprechend hoher Empfangssignalintensität auch ein nur teilweises Erfassen des Zielpunktes hinreichend sein kann, beispielsweise im Nahbereich. Als Beispiel kann in einem handgehaltenen Entfernungsmesser eine Empfangsoptik 24 als Kunststofflinse, z.B. mit einem Durchmesser von 15mm bis 50mm, insbesondere von etwa 18mm, mit einer Brennweite von 15mm bis 100mm, insbesondere von etwa 30mm, verwendet werden.

Da koaxiale Sende- und Empfangsstrahlengänge nur mit recht aufwändigen Optiken realisierbar sind, wird meist eine Nebeneinanderanordnung der Sendeoptik 21 und Empfangsoptik 24 gewählt, welche auch als para-axiale Anordnung bezeichnet wird. Das Ziel der Justage kann derart beschreiben werden, dass dabei die optischen Achsen von Sende- und Empfangsstrahlengang in einer Weise ausgerichtet werden, dass sich diese in einem Punkt in definierter Entfernung zumindest annähernd schneiden. Mit dem Ausdruck 'zumindest annähernd' soll dabei zum Ausdruck gebracht werden, dass der Schnitt der beiden Achsen nicht etwa bis in den Millimeter-Bereich genau hergestellt werden muss, sondern dass hierbei durchaus größere Toleranzen zulässig sein können. Als primäre Bedingung kann dabei die oben beschriebene Erfassbarkeit des von einem Zielpunkt zurückgestreuten Lichts über den gesamten Distanzmessbereich angesehen werden. Für große Entfernungen können die beiden optischen Achsen als beinahe parallel zueinander angesehen werden, wodurch ein schleifender Schnitt der beiden optischen Achsen entsteht, welcher eine exakte Bestimmbarkeit des Schnittpunktes in der vorgegebenen Entfernung erschweren kann. Das zumindest annähernde Schneiden der optischen Achsen kann auch in der Bedingung ausgedrückt werden, wonach der mittels der Sendeoptik 21 auf das Zielobjekt 22 projizierte Messlichtpunkt von der Empfangsoptik 24 auf das Empfangselement 10 gelenkt wird.

Die hierbei erforderlichen absoluten Genauigkeiten hängen im Detail von der jeweiligen Ausführungsform ab, insbesondere von Sendeoptik 21, Empfangsoptik 24, Sendestrahldurchmesser und Sendestrahldivergenz, spezifiziertem Entfernungsmessbereich, Komponentenanordnung, etc. Anders gesagt soll das Blickfeld des Empfängers 10 den auf ein in der definierten Entfernung aufgestelltes Zielobjekt 22 auftreffenden Sendestrahl 20 (- insbesondere möglichst zentrisch) erfassen, sodass auch Sendelichtpunkte auf Zielobjekten 22 in Entfernungen 26, welche größer oder kleiner als die definierten Entfernung sind, mit einer entsprechenden (durch die Winkelabweichung von Sende- und Empfangsrichtung bedingten) Abweichung aus dem Zentrum erfassbar bleiben, wobei der dabei erfassbare Bereich den Distanzmessbereich des EDMs bestimmt. Hierbei sind auch spezielle empfangswinkelabhängig verzerrende Empfangsoptiken 24 bekannt, welche insbesondere den erfassbaren Nahbereichs des Empfängers erweitern.

Aus Platzgründen sind die durch die optischen Achsen definierten Sende- und Empfangsrichtungen in der Figur recht steil zueinander dargestellt. In praktischen Realisierungen, insbesondere zur Messungen von größeren Distanzen 26 stehen die Strahlengänge meist in einem deutlich flacheren Winkel zueinander, als dieses hier dargestellt ist.

Bei der Montage (bzw. Inbetriebnahme, Kalibrierung oder Rekalibrierung) des EDMs 99 müssen die optischen Achsen des Sende- und Empfangsstrahlengangs oder die Sende- und Empfangsrichtung entsprechend gegeneinander ausgerichtet werden. Die vorliegende Erfindung befasst sich mit einem Justageverfahren hierzu, sowie mit entsprechenden Entfernungsmessern 99, mit welchen das erfindungsgemäße Verfahren durchführbar ist, welches in Form von exemplarischen Ausführungsformen erläutert wird und von welchem auch gestalterische Abweichungen möglich sind. Die Erfindung umfasst auch eine Vorrichtung, mit welcher eine erfindungsgemäße Justage durchführbar ist.

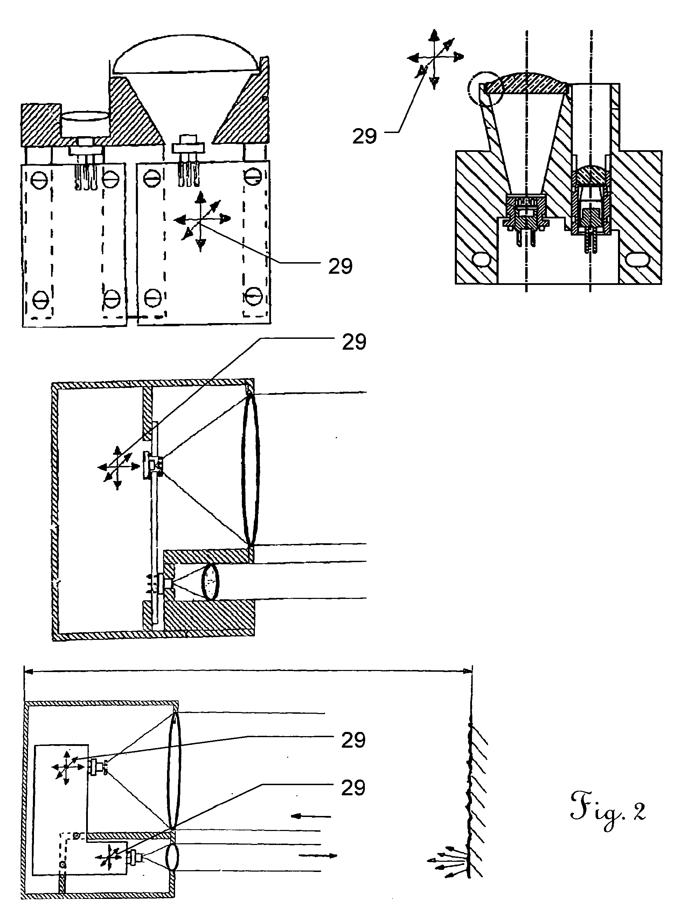

Fig. 2 illustriert einige aus dem oben zitierten Stand der Technik bekannte Justageverfahren für erfindungsgemäße para-axiale Distanzmesser, bei welchen entweder der Sender gegenüber dem Empfänger oder alternativ auch die Sendeoptik gegenüber der Empfangsoptik bewegt wird, um eine Justage der Sende- gegenüber der Empfangsrichtung zu erzielen. Die Beweglichkeit der Elemente zur Justage ist jeweils durch ein Pfeilkreuz 29 illustriert.

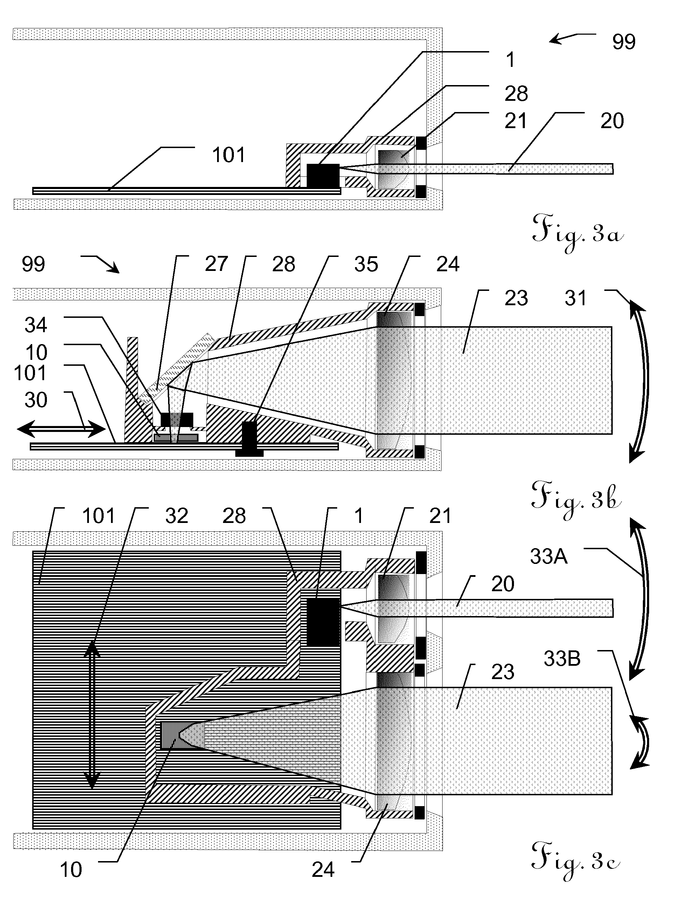

Fig. 3a, 3b und 3c zeigen eine beispielhafte Ausführungsform eines EDMs 99 in unterschiedlichen Schnittdarstellungen, wobei nicht alle Teile des EDMs 99 dargestellt sind.

Fig. 3a zeigt einen Schnitt durch das Sendeelement 9, welches mit der Leiterplatte 101 die starre Baugruppe 100 bildet, und die zugehörige Sendeoptik 21, welche am Optikträger 28 angebracht ist. Das elektrooptische Sendeelement 1 als Lichtemitter sendet einen optischen Sendestrahlengang 20 aus, welcher durch die Sendeoptik 21 geformt wird. Wie oben beschrieben soll hierbei eine gewünschte, geringe Divergenz des Sendestrahlengangs 20 erzielt werden, also die natürliche Divergenz des Sendeelements auf zumindest annähernd Null reduziert werden. In der gezeigten Ausführungsform wird dieses durch eine Sendeoptik 21 in Form einer Kollimationslinse bewirkt, welche durch eine Brennweite charakterisiert werden kann. Die Lichtquelle 9 sitzt dabei zumindest annähernd im Fokus der Kollimationslinse als Sendeoptik 21.

Gegenüber dem bekannten Stand der Technik bringt der erfindungsgemäße Aufbau des Entfernungsmessers mit einer starren Baugruppe 100 eine Reduktion der Anzahl der beweglichen Teile im Gerät mit sich, wodurch dieses robuster und stabiler wird, beispielsweise auch im Hinblick auf mögliche Dejustageeffekte im Einsatz auf Baustellen durch Stöße, Vibrationen, etc. Ein solcher Aufbau wird durch das erfindungsgemäße Justageverfahren erst ermöglicht, da die bekannten Justageverfahren mit einem solchen starren Aufbau nicht durchführbar wären.

Erfindungsgemäß kann eine bereits komplett vorgefertigte, starre Baugruppe 100 bei der Assemblierung in den EDM 99 eingebaut werden. Die bereits komplette Baugruppe 100 kann somit schon vor deren Einbau einem kompletten Funktionstest unterzogen werden, mit welchem alle elektronischen Komponenten, speziell auch der Lichtemitter und der photosensitive Detektor, eingeschlossen werden können, wie diese auch später im fertigen Gerät vorhanden sind. Auch kann somit die Assemblierung des Geräts ohne Lötvorgänge vonstattengehen.

**Fig 3b** zeigt einen Schnitt durch das optoelektrische Empfangselement 19, welches mit der Leiterplatte 101 die starre Baugruppe 100 bildet, und die zugehörige Empfangsoptik 24, welche den Empfangsstrahlengang 23 formt und in dem Optikträger 28 sitzt, in welchem sich auch die Sendeoptik 21 befindet oder welche mit der Sendeoptik 21 starr verbunden ist. In dieser Ausführungsform wird der Empfangsstrahlengang 23 nicht alleine durch die Empfangsoptik 24, sondern auch durch einen Umlenkspiegel 27 geformt. Der Empfangsstrahlengang 23 kann beispielsweise auch - wie hier gezeigt - ein Wellenlängenfilter 34 aufweisen, welches Licht außerhalb eines Wellenlängenbereichs der Sendestrahlung 20 dämpft. Die Empfangsoptik 24 kann wiederum mit einer Brennweite charakterisiert werden und hat das Empfangselement 10 zumindest annähernd in seinem Fokus angeordnet, welcher in dieser speziellen Ausführungsform vom Spiegelelement 27 umgelenkt ist.

**Fig 3c** zeigt einen Schnitt durch den EDM 99, welcher orthogonal zu den vorangegangenen liegt und die Baugruppe 100 mit dem optoelektrischen Empfangselement 10, dem elektrooptische Sendeelement 1 und der Leiterplatte 101 darstellt. Auch der Optikträger 28 mit der Sendeoptik 21 und dem zugehörigen Sendestrahlengang 20 sowie der Empfangsoptik 24 und dem zugehörigen Empfangsstrahlengang 23 sind dargestellt.

Das Verfahren zur erfindungsgemäßen Justage wird durch ein Bewegen der Baugruppe 100 mit der Leiterplatte 101, auf welcher Sendeelement 1 und Empfangselement 10 in einer vorgefertigten, fixen Position und Orientierung zueinander angebracht sind und bleiben, durchgeführt. In der gezeigten Ausführungsform liegt die Leiterplatte 100 von unten am Optikträger 28 an, sodass in diese Z-Richtung ein mechanischer Anschlag besteht, welcher die Lage der Baugruppe 100 bezüglich des Optikträgers 28 in dieser Z-Richtung vorgibt.

Die Baugruppe 100 kann somit noch in einem ersten lateralen X-Freiheitsgrad 30 und in einem zweiten lateralen Y-Freiheitsgrad 32 bewegt bzw. verschoben werden. Auf die Senderichtung des Sendestrahlengangs 20 hat eine Verschiebung in X-Richtung 30 keine direkte Auswirkung, wie aus **Fig. 3a** ersichtlich. Die Verschiebung in X-Richtung 30 hat auf die vertikale Empfangsrichtung 31 des Empfangsstrahlengangs 23 jedoch einen Einfluss, welcher mit dem, eine entsprechende Verschwenkung in vertikaler Richtung darstellen Bogen-Pfeil 31 in **Fig. 3b** symbolisiert wird. Somit kann in dieser Ausführungsform mit Hilfe einer Bewegung der Baugruppe 100 gegenüber dem Optikträger 28 in X-Richtung 30, die vertikale Ausrichtung von Empfangsrichtung zu Senderichtung justiert werden. Die Verschiebung in X-Richtung 30 bewirkt eine verschiebungsabhängige Richtungswinkeländerung der Empfangsrichtung zur Senderichtung, insbesondere in einer ersten, vertikalen Winkelrichtung der Sende- bzw. Empfangsrichtung, wodurch der Strahlengang des EDMs in einer ersten Winkelrichtung justierbar ist.

Eine Bewegung im zweiten lateralen Y-Freiheitsgrad 32 bewirkt sowohl für die Senderichtung als auch für die Empfangsrichtung eine horizontale Richtungswinkeländerung. Das erfindungsgemäße Justageverfahren nutzt dabei die aufgrund von unterschiedlichen Brennweiten der Sendeoptik 21 gegenüber der Empfangsoptik 24 auftretende Hebelwirkung, welche eine unterschiedliche verschiebungsbedingte Richtungswinkeländerung von Sende- und Empfangsrichtung bewirkt. Somit kann durch eine Verschiebung in Y-Richtung 32 eine horizontale Justage der Senderichtung gegenüber der Empfangsrichtung erzielt werden.

In Kombination lassen sich somit Sende- und Empfangsrichtung gegeneinander justieren, sodass ein gemeinsamer Schnittpunkt von der optischen Achse des Sendestrahlengangs gegenüber der optischen Achse des Empfangsstrahlengangs in einer vorgegebenen Entfernung zumindest annähernd hergestellt werden kann. Da im Rahmen der Justage meist nur relativ geringe, fertigungstoleranzbedingte Justagen von Sende- und Empfangsrichtung vorgenommen werden müssen, sind die erfindungsgemäß erzielbaren Winkeländerungen ausreichend, insbesondere da Sendeelement und Empfangselement bei der Fertigung der Baugruppe mit hoher Maßhaltigkeit im Sub-Millimeter-Bereich bestückt werden können. Als Beispiel für praktisch realisierte Werte des Verfahrwegs und der in einer beispielhaften Ausführungsform damit korrigierbaren Winkelfehlstellungen kann exemplarisch eine Justage einer horizontalen Laserfehlstellung in einem Winkelbereich von etwa $\pm1.5°$ durch eine Verschiebung von etwa $\pm0.5$mm und eine Justage einer vertikalen Laserfehlstellung in einem Winkelbereich von etwa $\pm1.2°$ durch eine Verschiebung der Baugruppe von etwa $\pm1$mm genannt werden. Es können durch Anpassungen der geometrischen Gegebenheiten in anderen Ausführungsformen auch erfindungsgemäße Justagen mit von obigem Beispiel abweichenden Zahlenwerten erzielt werden.

Nach erfolgter Justage kann die Baugruppe 100 gegenüber dem Optikträger in ihrer Position fixiert werden, beispielsweise durch Festschrauben, Verklemmen oder Verkleben.

Die im Rahmen der Justage einzustellenden Sende- und Empfangsrichtungen können durch zwei orthogonal zueinander stehende Winkelrichtungen beschrieben werden. In diesem Dokument wird die erste Komponente der Sende- bzw. Empfangsrichtung auch als Horizontalrichtung und die zweite Komponente der Sende- bzw. Empfangsrichtung auch als Vertikalrichtung des Sende- bzw. Empfangsstrahlengangs bezeichnet, wobei horizontal und vertikal keine absoluten Raumlagen angeben, sondern die Begriffe lediglich zur besseren Unterscheidbarkeit verwendet werden und diese absolut gesehen natürlich von der aktuellen Raumlage des EDMs 99 abhängen. Zusätzlich kann das Justageverfahren auch um ein Einstellen der Fokussierung erweitert werden, insbesondere um eine exakte Justage der Kollimation des Sendestrahlengangs 20, bei welchem meist höhere Genauigkeitsanforderungen an die Fokussierung zu stellen sind als beim Empfangsstrahlengang 23.

Die erfindungsgemäß bei der Justage angewendete Methode macht sich die unterschiedlichen Brennweiten der beiden Optiken zunutze, um eine Relativbewegung der optischen Achsen von Sendestrahlengang 20 zu Empfangsstrahlengang 23 zu erzielen, mittels welcher die Justage derart durchgeführt wird, dass der Messstrahlengang des EDMs den gewünschten Verlauf annimmt und allfällige Fertigungstoleranzen etc. ausgeglichen werden. Erfindungsgemäß wird dieses mit einem Verschieben einer Baugruppe 100, auf welcher Sender 1 und Empfänger 10 eine unveränderliche Position zueinander innehaben, erreicht. Es werden der Sender 1 und der Empfänger 10 immer gemeinsam verschoben. Auch die Sendeoptik 21 und Empfangsoptik 24, gegenüber welchen die Baugruppe 100 zur Justage verschoben wird, werden bei der Justage der Richtungen der Strahlengänge nicht gegeneinander oder gegen den diese tragenden Optikträger 28 in einer Art und Weise bewegt, welche die Senderichtung und/oder Empfangsrichtung verändert.

In entsprechend ausgestalteten Ausführungsformen können mit zwei orthogonalen Bewegungen der Baugruppe die beiden möglichen Strahlwinkelrichtungen unabhängig voneinander justiert werden. Beispielsweise kann eine Bewegung in X-Richtung eine Justage des Horizontalwinkels und eine Bewegung in Y-Richtung eine Justage des Vertikalwinkels des EDM-Strahlengangs bewirken.

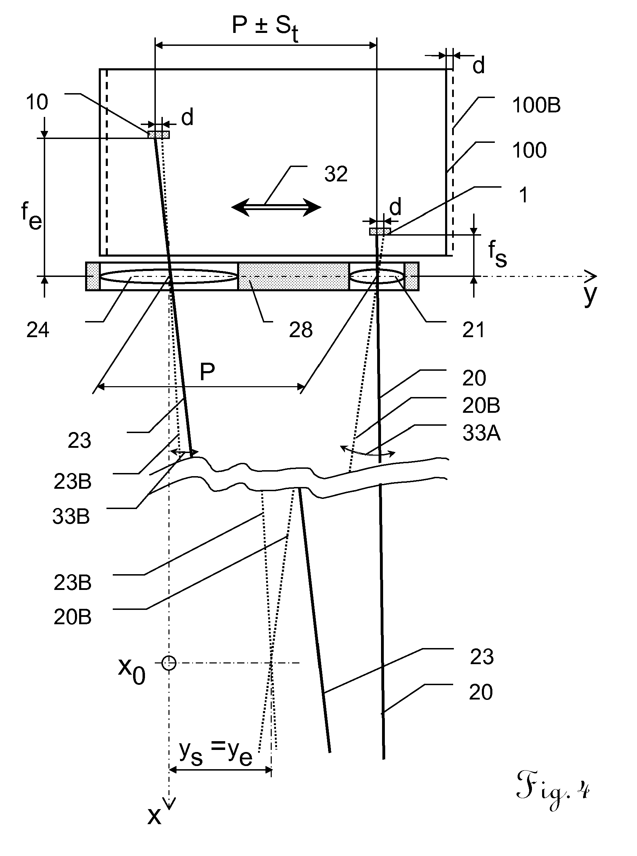

Fig. 4 illustriert nochmals schematisch ein Ausführungsbeispiel zur Erläuterung des erfindungsgemäßen Justageverfahrens eines EDM-Strahlengangs in einer eindimensionalen Darstellung. Dabei ist eine lineare Verschiebung 32 der Baugruppe 100, also eine gemeinsame Verschiebung von elektronischem Sendeelement 1 und Empfangselement 10, gegenüber der Sendeoptik 21 und Empfangsoptik 24 gezeigt. Die Auswirkung dieser Verschiebung auf die Sende- und Empfangsrichtung ist durch die jeweilige Winkeländerung 33A der Senderichtung und 33B der Empfangsrichtung gezeigt. Diese Winkeländerungen hängen sowohl vom Verschiebeweg als auch von dem Verhältnis der Sendebrennweite $f_s$ der Sendeoptik 21 zur Empfangsbrennweite $f_e$ der Empfangsoptik 24 ab. Beispielsweise kann in praktischen Ausführungsformen ein Brennweitenverhältnis von Empfangsoptik zu Sendeoptik etwa 1:1.1 bis 1:10 angewendet werden, insbesondere von 1:2 bis 1:5, speziell etwa von 1:3.

Die durchgezogenen Linien 20 und 23 stellen den Ausgangszustand vor der Verschiebung und die unterbrochenen Linien 20B und 23B den verschobenen Zustand dar, in welchem die Baugruppe 100 gegenüber den Optiken 21 und 24 im Optikträger 28 um den Weg d in die Position 100B verschoben ist. Es ist dem Betrachter offensichtlich, dass sich die unterbrochenen Linien 20B und 23B in ihrer Verlängerung in einem Punkt schneiden, welcher näher beim Distanzmesser 99 liegt als der Schnittpunkt der durchgezogenen Linien 20 und 23 vor der Verschiebung um den Wert d in Richtung 32, was eine erfindungsgemäße Justage des Strahlengangs des Distanzmessers 99 ermöglicht. Das hier eindimensional gezeigte Prinzip lässt sich auch auf eine zweite Dimension erweitern; es können die Fokuslängen-Verhältnisse geändert werden, etc.

Die Y-Position $y_e$ des Strahlengangs 23 in einer Entfernung x ergibt sich für den Empfangsstrahl zu $y_e = k_e \cdot x + 0$, und die Y-Position $y_s$ des Strahlengangs 20 in dieser Entfernung x ergibt sich für den Sendestrahl mit der Parallaxe P der beiden Optiken 21,24, also einem Versatz der optischen Achsen von Sendeoptik 21 gegenüber Empfängeroptik 24 zu $y_s = k_s \cdot x + P$.

Mit der Sende-Brennweite $f_s$ der Sendeoptik 21 und der Empfangs-Brennweite $f_e$ der Empfangsoptik 24 ergeben sich bei einer dargestellten Verschiebung d der Baugruppe die Werte von $k_s$ und $k_e$ zu $$k_s = \frac{d \pm S_t}{f_s}$$

und $$k_e = \frac{d}{f_e},$$ wobei $S_t$ eine Bestückungstoleranz von Sendeelement 1 gegenüber Empfangselement 10 ist.

Ein gemeinsamer Schnittpunkt in einer vorgegebenen Entfernung $x_0$ wird erzielt, wenn $y_s(x_0)=y_e(x_0)$ ist, also wenn $k_e \cdot x_0 = k_s \cdot x_0 + P$ ist, woraus sich die vorgegebene Entfernung $x_0$ zu $$x_0 = \frac{P}{k_e - k_s}$$ bestimmen lässt.

Die Einstellung der Schnittweite $x_0$ von Sende- und Empfangsstrahlengang ergibt sich damit in der dargestellten Ausführungsform zu

$$x_0 = \frac{P}{d} \cdot \left( \frac{f_e \cdot f_s}{f_s - f_e \pm S_t/d} \right) .$$

Am Beispiel der gezeigten Ausführungsform erläutert dieses, wie durch eine gemeinsame Verschiebung d von Sende- und Empfangselement eine angestrebte, vorgegebene Entfernung $x_0$ einjustiert, und damit auch eine allfällig vorhandene Bestückungstoleranz $S_t$ ausgeglichen werden kann, ohne dabei die Position von Sendeelement 1 gegenüber Empfangselement 10 und/oder die y-Position von Sendeoptik 21 gegenüber Empfangsoptik 24 zu verändern.

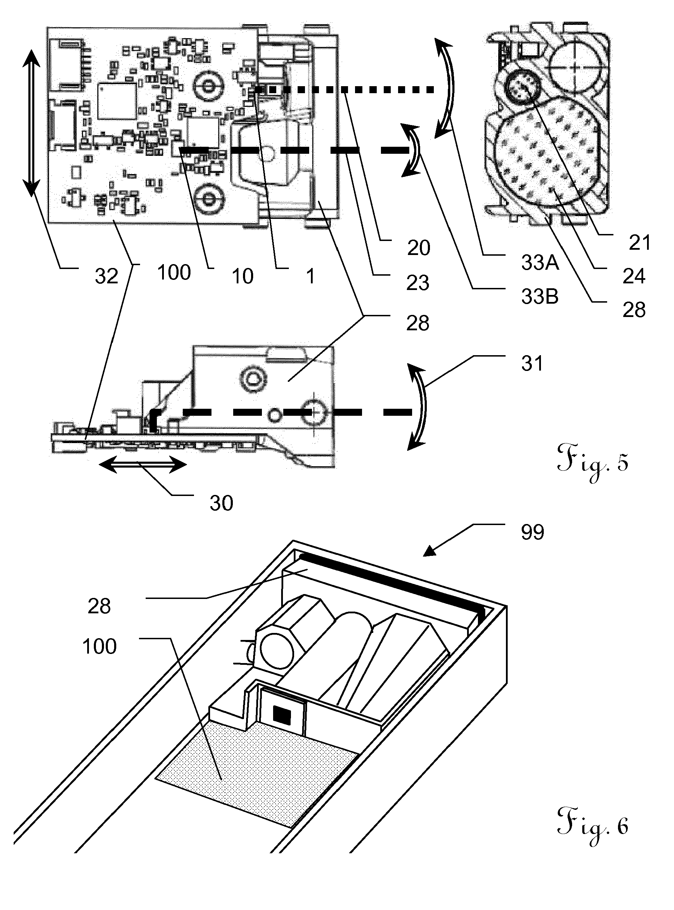

In **Fig. 5** ist eine weitere beispielhafte Ausführungsform eines erfindungsgemäßen Aufbaus eines EDMs 99 zur erfindungsgemäßen Justage dargestellt. Dabei werden durch eine Verschiebung der Leiterplatte 101 in Richtung 32 die Austrittswinkel der optischen Achsen aus dem Optikträger 28 mit der Empfangsoptik 24 und der Sendeoptik 21 jeweils unterschiedlich in einer ersten Richtung verändert, wie durch die Bogenpfeile 33A und 33B symbolisiert ist. Eine Verschiebung der Leiterplatte 101 in Richtung 30 verändert die optische Achse des Empfangsstrahlengangs 23 in einer zweiten Richtung, welche durch den Bogenpfeil 31 dargestellt ist.

**Fig. 6** zeigt eine 3D Darstellung eines EDMs 99, welcher erfindungsgemäß justierbar ist mit einem Optikträger 28 und einer Baugruppe 100, welche zumindest Sendeelement 1 und Empfangselement 10 in einer örtlich bestimmten fixen Lage zueinander aufweist.

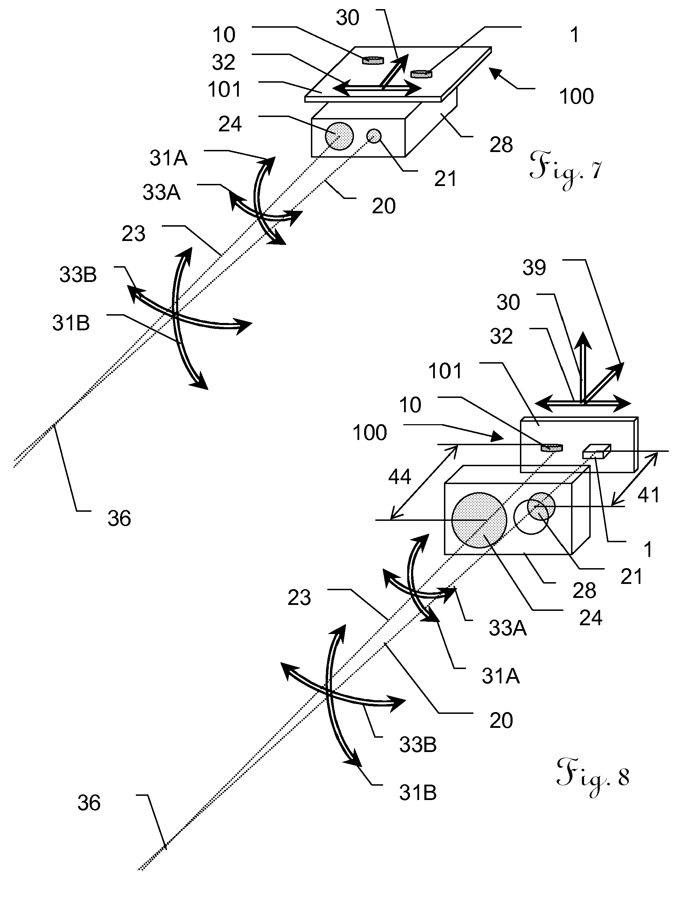

**Fig. 7** illustriert eine Ausführungsform, in welcher eine Umlenkung von Sendestrahlengang 20 und Empfangsstrahlengang 23 erfolgt. Weist die hier beispielhaft gezeigte, konstruktive Ausführungsform zumindest einen Umlenkspiegel auf, so kann der Aufbau ähnlich den Ausführungsformen von **Fig. 3a, 3b, 3c** oder **Fig. 5** gestaltet sein, wobei dann die Emissionswinkelrichtung 31B nicht von der Justage beeinflusst wird. Es sind erfindungsgemäß auch andere Ausführungsformen mit anderen Anordnungen von Umlenkspiegeln, beispielsweise nur im Sendestrahlengang 20 oder in beiden Strahlengängen 20 und 23 möglich, was die Auswirkungen einer Bewegung auf die Richtungsänderung des Strahlengangs verändert. Es wird jedoch erfindungsgemäß immer die unterschiedliche Brennweite von Sendeoptik 21 und Empfangsoptik 24 zur Justage von zumindest einer Komponente der Senderichtung 33B und/oder 31**B** und Empfangsrichtung 33A und/oder 31A zueinander genutzt, um den Schnittpunkt 36 herzustellen bzw. zu verschieben.

**Fig. 8** illustriert eine alternative Ausführungsform, welche keinen Umlenkspiegel aufweist. Hier ist das lichtempfindliche Element 1 beispielsweise als flache SMD-Photodiode mit einer lichtempfindlichen Fläche parallel zur Leiterplatte 101 ausgeführt. Auch die Lichtquelle 1 emittiert zumindest annähernd orthogonal zur Leiterplatte 101, beispielsweise in Form einer vertikal emittierenden Laserdiode, einer SMD-LED oder eines entsprechend montierten Halbleiterlasers. Die beiden photoelektrischen Komponenten 1 und 10 und die Leiterplatte 101 sind wiederum als Baugruppe 100 ortsfest zueinander vormontiert, und die Baugruppe 100 kann zu Justagezwecken als Gesamtes gegenüber dem Optikträger 28 mit der Sendeoptik 20 und der Empfangsoptik 24 bewegt werden. Dabei bewirkt eine Bewegung in Richtung 32 unterschiedliche Winkeländerungen der Strahlengänge 20 und 23 in Richtung 33A und 33B. Eine Bewegung in Richtung 30 bewirkt jeweils unterschiedliche Winkeländerungen der Strahlengänge 20 und 23 in Richtung 31A und 31B. Eine Bewegung in Richtung 39 bewirkt eine Fokusänderung, wobei die Justage des Fokus erfindungsgemäß auch wie anderweitig beschrieben durchgeführt werden kann. Den unterschiedlichen Brennweiten $f_e$ bzw. $f_e$ kann zum einen durch unterschiedlich von der Leiterplatte 101 aufragendem Sendeelement 1 und Empfangselement 10 Rechung getragen werden und/oder durch den dargestellten axialen Versatz von Sendeoptik 21 und Empfangsoptik 24.

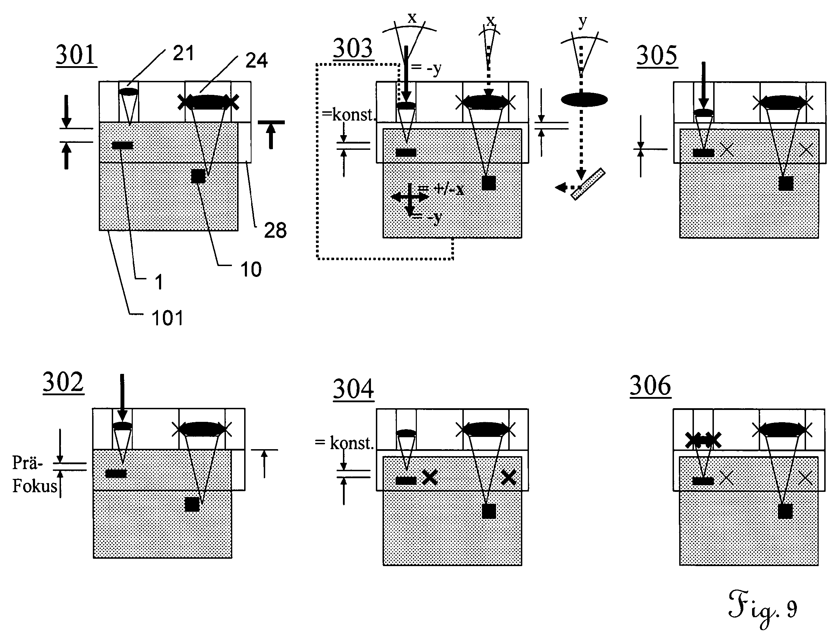

**Fig. 9** stellt eine mögliche Ausführungsform eines Justagevorgangs in einem EDM dar, welches auch eine erfindungsgemäße Justage der Ausrichtung der optischen Achsen von Sende- und Empfangsstrahlengang durchführt. Die gezeigte Ausführungsform einer erfindungsgemäßen Justage eines EDMs 99 im Rahmen von Illustrationen von Ablaufschritten dar, welche einen beispielhaften Ablauf einer EDM-Justage illustrieren. Neben der erfindungsgemäßen Richtungsjustage sind dabei auch weitere, optionale Schritte einer EDM-Justage dargestellt.

Im ersten Bild 301 wird die vorgefertigte Baugruppe mit Sender und Empfänger und der Optikträger mit Sende und Empfangsoptik vormontiert, also Optikträger und Baugruppe noch beweglich zueinander montiert. Dabei liegt die Baugruppe orthogonal zur Zeichnungsebene (Z-Richtung) am Optikträger an, hat in dieser Richtung also einen mechanischen Anschlag. Bei der Vormontage wird die Baugruppe auch in Y-Richtung ganz vorne, also so nahe wie möglich an den Optiken, positioniert. Baugruppe und Optikträger werden jedoch noch nicht zueinander fixiert, sondern sind in der X-Y-Ebene zueinander verschiebbar, wenn auch mit einem eingeschränkten Verschiebebereich. Diese kann beispielsweise durch nur lose angezogene Schauben von unten durch die Baugruppe in den optikträger erfolgen, wobei die hierfür vorgesehenen Löcher in der Baugruppe einen größeren Durchmesser als den Außendurchmesser der Schrauben aufweisen, sodass ein Gegeneinanderverschieben in X-Y-Richtung noch möglich ist. Dabei können die Schrauben nur lose angezogen werden oder diese Position durch eine Vorrichtung sichergestellt werden und die Schrauben erst im Rahmen des Fixierens der justierten Position eingesetzt werden. Die Empfangsoptik kann im Optikträger meist schon fix vormontiert, und z.B. auch verklebt sein, da bei dieser funktionsbedingt die Anforderungen an die Einhaltung einer exakten Fokussierung geringer sind, auch wegen der größeren Fokuslänge.

Wie Bild 302 zeigt, kann in dieser vormontierten Position nun die Sendeoptik, hier als Kollimationslinse im Optikträger dargestellt, in eine Pre-Fokus-Position gebracht werden, beispielsweise durch ein Einpressen der Linse von vorne in eine tubusförmige Ausnehmung des Optikträgers, in welcher die Kollimationslinse auch schon vormontiert gewesen sein kann. Da justagebedingt jedoch noch allfällige Korrekturen nötig sind, kann dieser Vorgang wie gesagt kurz vor Erreichen der Fokus-Position, beispielsweise etwa 50um vor der Focus-Position abgebrochen werden. Der emittierte Strahl des Sendeelements hat hiermit eine für die folgende Justage hinreichend kleine Divergenz.

Bild 303 zeigt den Kern des erfindungsgemäßen Justageverfahrens, bei welchem durch ein Bewegen der Baugruppe gegenüber dem Optikträger in X und Y-Richtung der Sende und Empfangsstrahlengang zueinander ausgerichtet werden. Dieses erfolgt erfindungsgemäß durch Nutzung der Hebelwirkung der unterschiedlichen Brennweiten von Sendeoptik und Empfangsoptik. Da die Vormontage in Y-Richtung am vordersten Anschlag in Richtung der Linsen erfolgte, kann eine Justage nur in die negative Y-Richtung erfolgen, welche eine Defokussierung der Sendeoptik bewirkt. Die konstruktive Auslegung unter Berücksichtigung der maximalen Toleranzen ermöglicht eine Justage in nur eine Richtung, ohne dabei in die Bedrängnis zu kommen, dass eine Justage in die andere Richtung erfolgen muss, indem die Vormontageposition eine Extremstellung darstellt. Um eine Defokussierung zu vermeiden, kann dabei die Sendeoptik bei der Justage in Y-Richtung mitverschoben werden, wodurch die Pre-Fokuspostion beibehalten wird. Da die Empfangsoptik wie beschreiben geringere Anforderungen an die Fokus-Genauigkeit hat, kann zumeist auf ein Mitverschieben dieser verzichtet werden. In der dargestellten Ausführungsform bewirkt eine Justage in Y-Richtung - bedingt durch den Umlenkspiegel 34 eine vertikale Justage der Sendestrahlrichtung, also eine Drehbewegung des Sendestrahls um die X-Achse oder anders ausgedrückt eine Drehung in einer Eben normal zur Zeichnungsebene.

Die Justage in X-Richtung bewirkt ein Schwenken von Sende- und Empfangsrichtung in der Zeichnungsebene, also um die Z-Achse. Hierbei tritt besonders der Effekt der Hebewirkung durch die unterschiedlichen Brennweiten zum Vorschein, wodurch dieselbe X-Bewegung von Sender und Empfänger bei Sende- und Empfangsstrahlengang unterschiedliche Winkelablenkungen bewirkt. Es kann somit beispielsweise auch ein Strahlengang den anderen überholen.

Die Justage in X- und Y-Richtung wird ausgeführt, bis Senderichtung und Empfangsrichtung die gewünschte Ausrichtung zueinander aufweisen, also beispielsweise bis ein Schnittpunkt der optische Achsen von Sende- und Empfangsstrahlengang in einem Punkt in einer bestimmten, gewünschten Entfernung zumindest annähernd bzw. hinreichend genau erreicht wird. Dieses kann automatisch, z.B. durch Stellmotoren und eine entsprechende Steuerungslogik, semimanuell oder gänzlich manuell durch einen Arbeiter ausgeführt werden. Zur erfindungsgemäßen Justage kann eine entsprechende Vorrichtung bereitgestellt werden.

Nach erfolgter Justage wird in Bild 304 die Baugruppe und der Optikträger zueinander fixiert, beispielsweise durch Festziehen der zuvor genannten Schrauben, Kleben, Klemmen, etc.

In Bild 305 kann - nachdem Baugruppe und Optikträger zueinander fixiert sind - die Kollimationslinse von ihrer Pre-Fokus-Position noch weiter eingepresst werden. Da die Fokusposition der Kollimationslinse meist hochgenau, beispielsweise mit Toleranzen im Bereich von 2-5um eingestellt werden muss, geschieht dieses in dieser beispielhaften Ausführungsform erst, nachdem die Justage abgeschlossen ist und die restlichen Komponenten in ihren Lagen zueinander fixiert sind. Durch die zuvor gewählte Pre-Focus-Postition sollte ein Erreichen der genauen Fokus-Position durch Einpressen der Linse von vorne in jedem Falle gewährleistet sein.

Falls der Halt des Presssitzes der Linse nicht robust genug ist, kann die Sendeoptik wie in Bild 306 noch zusätzlich fixiert, beispielsweise verklebt werden. Somit ist die Justage des Strahlengangs des Entfernungsmessers abgeschlossen.

In für den Fachmann offensichtlicher Weise können auch weitere Ausführungsformen eines EDMs entsprechend des erfindungsgemäßen Verfahrens justiert werden, welche ingenieursmäßig entsprechend den Bedürfnissen des konkreten Distanzmessers adaptiert bzw. optimiert sind.

## Patentansprüche

1. Justageverfahren für einen optoelektronischen Entfernungsmesser (99), welcher

   - eine Baugruppe (100) mit

     - einer Strahlungsquelle (1) zum Aussenden einer optischen Sendestrahlung (20),
     - einem Detektor (10) zum Empfangen einer optischen Empfangsstrahlung (23) und
     - einer Leiterplatte,

   welche in starrer örtlicher Beziehung zueinander angeordnet sind, und
   - einen Optikträger (28) mit

     - einer Sendeoptik (21) und

- einer Empfangsoptik (24),

wobei durch die Strahlungsquelle (1) und die Sendeoptik (21) eine Senderichtung und durch den Detektor (10) und die Empfangsoptik (24) eine Empfangsrichtung definiert werden und die Sendeoptik (21) und die Empfangsoptik (24) unterschiedliche Brennweiten aufweisen,

aufweist, und
das Justageverfahren eine angestrebte Ausrichtung der Senderichtung gegenüber der der Empfangsrichtung herstellt,
**dadurch gekennzeichnet, dass**
ein Justieren durch ein Verschieben der gesamten Baugruppe (100) gegenüber dem Optikträger (28) erfolgt, wobei das Verschieben durch eine Hebelwirkung der unterschiedlichen Brennweiten jeweils unterschiedlich große, verschiebungsbedingte Richtungswinkeländerungen von Senderichtung und Empfangsrichtung bewirkt, wodurch die Ausrichtung der Senderichtung gegenüber der Empfangsrichtung variiert wird.

2. Justageverfahren nach Anspruch 1, **dadurch gekennzeichnet, dass** durch das Verschieben in einer ersten lateralen Richtung eine erste Winkelausrichtung der Senderichtung zur Empfangsrichtung Justiert wird.

3. Justageverfahren nach einem der Ansprüche 1 oder 2, **dadurch gekennzeichnet, dass** durch das Verschieben in einer zweiten lateralen Richtung eine zweite Winkelausrichtung der Senderichtung zur Empfangsrichtung Justiert wird, insbesondere wobei die erste und zweite laterale Richtung und die erste und zweite Winkelausrichtung jeweils voneinander unabhängig, insbesondere orthogonal zueinander, sind.

4. Justageverfahren nach einem der Anspruch 3, **dadurch gekennzeichnet, dass** durch das Verschieben in der zweiten lateralen Richtung die Empfangsrichtung variiert und die Senderichtung unverändert lässt.

5. Justageverfahren nach einem der Ansprüche 1 bis 4, **dadurch gekennzeichnet, dass** ein Anliegen an einer gemeinsamen Auflagefläche von Optikträger (28) und Baugruppe (100) die Richtung des lateralen Verschiebens definiert.

6. Justageverfahren nach einem der Ansprüche 1 bis 5, **dadurch gekennzeichnet, dass** bei der Justage die Lage der Sendeoptik (21) gegenüber der Empfangsoptik (24) orthogonal zur deren optischen Achse unverändert bleibt insbesondere wobei die Sendeoptik (21) und/oder die Empfangsoptik (24) allenfalls nur für eine Korrektur einer Fokussierung axial verschoben werden.

7. Justageverfahren nach einem der Ansprüche 1 bis 6, **dadurch gekennzeichnet, dass** vor der Justage die Lage der Empfangsoptik (21) im Optikträger (28) bereits endgültig fixiert ist.

8. Justageverfahren nach einem der Ansprüche 1 bis 7, **dadurch gekennzeichnet, dass**
vor der Justage die Lage der Sendeoptik (21) im Optikträger (28) in eine Pre-Fokus-Stellung vorkollimiert wird, in welcher eine Divergenz der vom Entfernungsmesser (99) emittierten Sendestrahlung (20) größer als jene einer optimalen Kollimation ist, insbesondere wobei ausgehend von der Pre-Fokus-Stellung die Fokusstellung durch ein Verschieben der Sendeoptik (21) in einer tubusförmigen Ausnehmung des Optikträgers (28) erzielbar ist.

9. Justageverfahren nach Anspruch 8, **gekennzeichnet durch** ein Beibehalten der vorkollimierten Pre-Fokus-Stellung der Sendeoptik (21) während der Justage **durch** Mitverschieben der Sendeoptik (21) mit der Baugruppe (100) in Fokus-Richtung der Sendeoptik (21).

10. Justageverfahren nach einem der Ansprüche 1 bis 9, **dadurch gekennzeichnet, dass** nach dem Justieren und einem Fixieren der Baugruppe (100) gegenüber dem Optikträger (28) ein Kollimieren der Sendeoptik (21) in Richtung Fokus-Stellung zur Einstellung einer gewünschten Divergenz des Sendestrahlengangs (20) durchgeführt wird, insbesondere durch ein Einpressen der Sendeoptik (21) in eine tubusförmige Ausnehmung des Optikträgers (28).

11. Justageverfahren nach einem der Ansprüche 8 bis 10,
**dadurch gekennzeichnet, dass**
vor dem Vorkollimieren ein Positionieren der Baugruppe (100) gegenüber dem Optikträger (28) in einer Position erfolgt, von welcher aus die Baugruppe (100) nur in Richtung einer Dekollimation der Sendeoptik (21) oder orthogonal dazu verschiebbar ist.

12. Justageverfahren nach einem der Ansprüche 1 bis 11,
**dadurch gekennzeichnet, dass**
die Sendeoptik (21) und/oder die Empfangsoptik (24) einen Umlenkspiegel (27) aufweist.

13. Justageverfahren nach einem der Ansprüche 1 bis 12,
**dadurch gekennzeichnet, dass**
die angestrebte Ausrichtung der Senderichtung gegenüber der der Empfangsrichtung dadurch definiert ist, dass Senderichtung und Empfangsrichtung zumindest annähernd einen gemeinsamen Schnittpunkt in einer vorgegebenen Entfernung aufweisen.

14. Optoelektronischer Entfernungsmesser (99), insbesondere handgehaltener Laser-Distanzmesser, mit:

 ▪ einer Leiterplatte, einer optischen Strahlungsquelle (1) und einem optischen Detektor (10), welche als gemeinsame Baugruppe (100) unverrückbar gegeneinander positioniert und orientiert sind,

 ▪ einem Optikträger (28) mit einer Sendeoptik (21) und einer Empfangsoptik (24) mit einer jeweils unterschiedlichen Brennweite, insbesondere wobei die Sendeoptik (21) und Empfangsoptik (24) gegeneinander lediglich in Richtung ihrer jeweiligen optischen Achsen verschiebbar sind, und

 ▪ einer elektronischen Auswerteeinheit (13), mit welcher auf Basis einer Signallaufzeit anhand eines digitalisierten Empfangssignals des Detektors (10) eine Distanz (26) vom Entfernungsmesser (99) zu einem Zielobjekt (22) ermittelbar ist,

**dadurch gekennzeichnet, dass**
dieser mit einem Justierverfahren nach einem der Ansprüche 1 bis 13 justiert ist.

15. Entfernungsmesser (99) nach Anspruch 14, **dadurch gekennzeichnet, dass**
die Strahlungsquelle (1) parallel zu einer Oberfläche der Leiterplatte in Richtung der Sendeoptik (21) emittiert,
der Detektor (10) einen parallel zur Leiterplatte liegenden photosensitiven Bereich aufweist,
und Licht von der Empfangsoptik (24) über einen Umlenkspiegel (27) auf den Detektor (10) gelenkt wird, und die Baugruppe (100) gegenüber dem Optikträger (28) in einer ersten und zweiten Richtung verschiebbar und in einer dritten Richtung an einem mechanischen Anschlag anliegend ist, insbesondere wobei die Sendeoptik (21) zur Kollimation einer von der optischen Strahlungsquelle (1) emittierten Strahlung in eine tubusförmige Aufnahme des Optikträgers (28) axial zur optischen Achse der Sendeoptik 21 einpressbar ist.

**Claims**

1. An adjustment method for an optoelectronic distance meter (99), which comprises:

 ▪ a module (100) having

   ▪ a radiation source (1) for emitting optical emission radiation (20),
   ▪ a detector (10) for receiving optical reception radiation (23), and
   ▪ a printed circuit board,

 which are arranged in a rigid spatial relation to one another, and
 ▪ an optics carrier (28) having

   ▪ emission optics (21) and
   ▪ reception optics (24),

 an emission direction being defined by the radiation source (1) and the emission optics (21), and a reception direction being defined by the detector (10) and the reception optics (24), and the emission optics (21) and the reception optics (24) having different focal lengths,

and
the adjustment method establishes a desired orientation of the emission direction relative to the reception direction,
**characterized in that**
adjustment is carried out by displacing the entire module (100) relative to the optics carrier (28), the displacement causing displacement-induced direction angle changes of the emission direction and the reception direction by a lever action of the different focal lengths of respectively different size, so that the orientation of the emission direction relative to the reception direction is varied.

2. The adjustment method as claimed in claim 1, **characterized in that** a first angular orientation of the emission direction with respect to the reception direction is adjusted by the displacement in a first lateral direction.

3. The adjustment method as claimed in claim 1 or 2, **characterized in that** a second angular orientation of the emission direction with respect to the reception direction is adjusted by the displacement in a second lateral direction, in particular with the first and second lateral directions and the first and second angular orientations respectively being independent of one another, in particular orthogonal to one another.

4. The adjustment method as claimed in claim 3, **characterized in that** the reception direction is varied, and the emission direction remains unchanged, by the displacement in the second lateral direction.

5. The adjustment method as claimed in any one of claims 1 to 4, **characterized in that** bearing on a common support surface of the optics carrier (28) and the module (100) defines the direction of the lateral displacement.

**6.** The adjustment method as claimed in any one of claims 1 to 5, **characterized in that** the position of the emission optics (21) relative to the reception optics (24) orthogonally to their optical axis remains unchanged during the adjustment, in particular with the emission optics (21) and/or the reception optics (24) being displaced axially at most only for correction of focusing.

**7.** The adjustment method as claimed in any one of claims 1 to 6, **characterized in that** the position of the reception optics (21) in the optics carrier (28) is already definitively fixed before the adjustment.

**8.** The adjustment method as claimed in any one of claims 1 to 7, **characterized in that**
before the adjustment, the position of the emission optics (21) in the optics carrier (28) is precollimated into a prefocus setting, in which a divergence of the emission radiation (20) emitted by the distance meter (99) is greater than that of optimal collimation, in particular the focus setting being achievable from the prefocus setting by displacement of the emission optics (21) in a tubular recess of the optics carrier (28).

**9.** The adjustment method as claimed in claim 8, **characterized by** maintenance of the precollimated prefocus setting of the emission optics (21) during the adjustment by joint displacement of the emission optics (21) with the module (100) in the focus direction of the emission optics (21).

**10.** The adjustment method as claimed in any one of claims 1 to 9, **characterized in that**
after the adjustment and fixing of the module (100) relative to the optics carrier (28), collimation of the emission optics (21) in the focus setting direction is carried out in order to adjust a desired divergence of the emission beam path (20), in particular by pressing the emission optics (21) into a tubular recess of the optics carrier (28).

**11.** The adjustment method as claimed in any one of claims 8 to 10, **characterized in that**
before the precollimation, positioning of the module (100) relative to the optics carrier (28) is carried out in a position from which the module (100) can be displaced only in the direction of decollimation of the emission optics (21) or orthogonally thereto.

**12.** The adjustment method as claimed in any one of claims 1 to 11, **characterized in that**
the emission optics (21) and/or the reception optics (24) comprise a deviating mirror (27).

**13.** The adjustment method as claimed in any one of claims 1 to 12, **characterized in that**
the desired orientation of the emission direction relative to the reception direction is defined **in that** the emission direction and the reception direction at least approximately have a common point of intersection at a predetermined distance.

**14.** An optoelectronic distance meter (99), in particular a handheld laser distance meter, having:

- a printed circuit board, an optical radiation source (1) and an optical detector (10), which are positioned and oriented immovably with respect to one another as a common module (100),
- an optics carrier (28) having emission optics (21) and reception optics (24) with a respectively different focal length, in particular with the emission optics (21) and the reception optics (24) being displaceable with respect to one another only in the direction of their respective optical axes, and
- an electronic evaluation unit (13) with which a distance (26) from the distance meter (99) to a target object (22) can be determined on the basis of a signal time of flight with the aid of a digitized reception signal of the detector (10),

**characterized in that**
it is adjusted by an adjustment method as claimed in any one of claims 1 to 13.

**15.** The distance meter (99) as claimed in claim 14, **characterized in that**
the radiation source (1) emits parallel to a surface of the printed circuit board in the direction of the emission optics (21),
the detector (10) has a photosensitive region lying parallel to the printed circuit board,
and light from the reception optics (24) is directed by means of a deviating mirror (27) onto the detector (10),
and the module (100) is displaceable relative to the optics carrier (28) in a first direction and a second direction, and bears on a mechanical stop in a third direction, in particular with the emission optics (21) being pressable into a tubular recess of the optics carrier (28), axially with respect to the optical axis of the emission optics 21, in order to collimate radiation emitted by the optical radiation source (1).

**Revendications**

**1.** Procédé d'ajustement pour un télémètre optoélectronique (99) qui présente

- un sous-ensemble (100) avec

 - une source de rayonnement (1) pour émettre un rayonnement d'émission optique (20),

- un détecteur (10) pour recevoir un rayonnement de réception optique (23) et
- un circuit imprimé

qui sont placés en relation locale rigide l'un par rapport à l'autre et
- un support d'optique (28) avec

  - une optique d'émission (21) et
  - une optique de réception (24),

cependant qu'une direction d'émission est définie par la source de rayonnement (1) et l'optique d'émission (21) et une direction de réception est définie par le détecteur (10) et l'optique de réception (24) et l'optique d'émission (21) et l'optique de réception (24) présentent différentes focales et

le procédé d'ajustement produit une orientation recherchée de la direction d'émission par rapport à celle de la direction de réception, **caractérisé en ce qu'**un ajustement est réalisé par un déplacement de tout le sous-ensemble (100) par rapport au support d'optique (28), cependant que le déplacement provoque, par un effet de levier des différentes focales, des modifications d'angle de direction de différentes grandeurs de la direction d'émission et de la direction de réception qui sont dues au déplacement si bien que l'orientation de la direction d'émission varie par rapport à la direction de réception.

2. Procédé d'ajustement selon la revendication 1, **caractérisé en ce qu'**une première orientation d'angle de la direction d'émission est ajustée par rapport à la direction de réception par le déplacement dans une première direction latérale.

3. Procédé d'ajustement selon l'une des revendications 1 ou 2, **caractérisé en ce qu'**une seconde orientation d'angle de la direction d'émission est ajustée par rapport à la direction de réception par le déplacement dans une seconde direction latérale, en particulier cependant que la première et la seconde direction latérale et la première et la seconde orientation d'angle sont respectivement indépendantes l'une de l'autre, en particulier sont orthogonales l'une par rapport à l'autre.

4. Procédé d'ajustement selon la revendication 3, **caractérisé en ce que** la direction de réception varie par le déplacement dans la seconde direction latérale et la direction d'émission est laissée inchangée.

5. Procédé d'ajustement selon l'une des revendications 1 à 4, **caractérisé en ce qu'**une application contre une surface d'appui commune du support d'optique (28) et du sous-ensemble (100) définit la direction du déplacement latéral.

6. Procédé d'ajustement selon l'une des revendications 1 à 5, **caractérisé en ce que**, lors de l'ajustement, la situation de l'optique d'émission (21) par rapport à l'optique de réception (24) orthogonalement par rapport à son axe optique reste inchangée, en particulier cependant que l'optique d'émission (21) et/ou l'optique de réception (24) sont déplacées axialement tout au plus seulement pour une correction de focalisation.

7. Procédé d'ajustement selon l'une des revendications 1 à 6, **caractérisé en ce qu'**avant l'ajustement la situation de l'optique de réception (21) dans le support d'optique (28) est déjà fixée définitivement.

8. Procédé d'ajustement selon l'une des revendications 1 à 7, **caractérisé en ce qu'**avant l'ajustement la situation de l'optique d'émission (21) dans le support d'optique (28) est précollimatée dans une position de préfocalisation dans laquelle une divergence du rayonnement d'émission (20) émis par le télémètre (99) est plus grande que celle d'une collimation optimale, en particulier cependant que, partant de la position de préfocalisation, la position de focalisation peut être atteinte par un déplacement de l'optique d'émission (21) dans un évidement en forme de tube du support d'optique (28).

9. Procédé d'ajustement selon la revendication 8, **caractérisé par** un maintien de la position précollimatée de préfocalisation de l'optique d'émission (21) pendant l'ajustement par le déplacement simultané de l'optique d'émission (21) avec le sous-ensemble (100) dans la direction du foyer de l'optique d'émission (21).

10. Procédé d'ajustement selon l'une des revendications 1 à 9, **caractérisé en ce qu'**après ajustage et une fixation du sous-ensemble (100) par rapport au support d'optique (28) une collimation de l'optique d'émission (21) en direction de la position de focalisation est exécutée pour le réglage d'une divergence souhaitée de la marche des faisceaux d'émission (20), en particulier par un enfoncement de l'optique d'émission (21) dans un évidement en forme de tube du support d'optique (28).

11. Procédé d'ajustement selon l'une des revendications 8 à 10, **caractérisé en ce qu'**avant la précollimation un positionnement du sous-ensemble (100) par rapport au support d'optique (28) est effectué dans une position à partir de laquelle le sous-ensemble (100) ne peut être déplacé qu'en direction d'une décollimation de l'optique d'émission (21) ou orthogonalement par rapport à celle-ci.

12. Procédé d'ajustement selon l'une des revendications 1 à 11, **caractérisé en ce que** l'optique d'émission (21) et/ou l'optique de réception (24) présente un miroir de renvoi (27).

13. Procédé d'ajustement selon l'une des revendications 1 à 12, **caractérisé en ce que** l'orientation recherchée de la direction d'émission par rapport à celle de la direction de réception est définie par le fait que la direction d'émission et la direction de réception présentent, tout au moins approximativement, un point d'intersection commun à une distance prédéterminée.

14. Télémètre optoélectronique (99), en particulier distancemètre laser portatif, avec

   - un circuit imprimé, une source de rayonnement optique (1) et un détecteur optique (10) qui sont positionnés et orientés de manière fixe en tant que sous-ensemble commun (100) l'un par rapport à l'autre,
   - un support d'optique (28) avec une optique d'émission (21), une optique de réception (24) avec une focale respectivement différente, en particulier cependant que l'optique d'émission (21) et l'optique de réception (24) sont déplaçables l'une par rapport à l'autre en direction de leurs axes optiques respectifs et
   - une unité d'évaluation électronique (12) avec laquelle une distance (26) par rapport à un objet cible (22) peut être détectée par le télémètre (99) sur la base d'une durée de signal à l'aide d'un signal de réception numérisé du détecteur (10),

   **caractérisé en ce que** celui-ci est ajusté avec un procédé d'ajustement selon l'une des revendications 1 à 13.

15. Télémètre (99) selon la revendication 14, **caractérisé en ce que** la source de rayonnement (1) émet parallèlement à une surface du circuit imprimé en direction de l'optique d'émission (21), que le détecteur (10) présente une zone photosensible située parallèlement au circuit imprimé et que de la lumière de l'optique de réception (24) est déviée par un miroir de renvoi (27) sur le détecteur (10) et le sous-ensemble (100) est déplaçable par rapport au support d'optique (28) dans une première et une seconde direction et est en butée contre une butée mécanique dans une troisième direction, en particulier cependant que l'optique d'émission (21) peut être enfoncée pour la collimation d'un rayonnement émis par la source de rayonnement optique (1) dans un logement en forme de tube du support d'optique (28) axialement par rapport à l'axe optique de l'optique d'émission 21.

*Fig. 1*

29

29

29

29

29

29

Fig. 2

*Fig. 3a*

*Fig. 3b*

*Fig. 3c*

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2051102 A
- EP 1311873 A
- EP 1913415 A
- EP 1351070 A
- EP 1752788 A
- WO 2007012531 A
- WO 2007033860 A
- DE 10157378
- EP 1980878 A
- EP 0738899 A
- EP 0932835 A
- DE 4002356
- WO 2011076907 A
- EP 11187964 A
- EP 2183865 A